# EUROPEAN PATENT APPLICATION

(11) **EP 4 846 850 A1**
(43) Date of publication of application: **02.12.2026**
(21) Application number: 25300067.3
(22) Date of filing: 26.05.2025
(51) Int. Cl.: A01N 59/20, A01P 3/00

(54) **METHOD OF FORMING A PARTICULATE COMPOSITION AND USE THEREOF AS A FUNGICIDE**

(71) Applicant: ImerTech SAS, 75015 Paris (FR)
(72) Inventor: Lecointe, Charles, 69390 Charly (FR); Groulard Lemoine, Coralie, 31450 Montgiscard (FR); Margariti, Ourania, 31770 Colomiers (FR); Karalis, Thanasis, 15233 Chalandri (GR); Careme, Christel, 31850 Mondouzil (FR)
(74) Representative: Haseltine Lake Kempner LLP

(57) **Abstract**

The present invention relates to a method of forming a particulate composition suitable for use as a fungicide for plant or plant leaf or plant fruit protection, the method comprising the steps of: blending bentonite, a copper compound, optionally water and optionally a formulation aid, to form a paste, wherein the bentonite comprises water, and wherein the weight ratio of the bentonite to elemental copper is at least about 11; drying the paste until the water content of the paste is below about 15 wt.%; and reducing the size of the dried paste to form particulates, by any method, such as by grinding or milling or crushing or sieving or extruding or classifying to form particulates, and method of use, and uses of said particulate composition.

## Description

### FIELD OF THE INVENTION

The present invention relates to a method of forming a particulate composition suitable for use as a fungicide for plant or plant leaf or plant fruit protection, a method for treating or reducing fungal and/or bacterial diseases on a plant or plant leaf or plant fruit using said particulate composition, and use of such a particulate composition to reduce or treat fungal and/or bacterial diseases on a plant or plant leaf or plant fruit.

### BACKGROUND OF THE INVENTION

Copper is commonly used as an effective fungicide for controlling fungal, viral and bacterial infections. For example, Bordeaux mixture, containing copper sulphate and lime is commonly used to control downy mildew on grapes.

Problematically, copper is prone to accumulation in the soil. Therefore, in many countries and geographical regions, such as Europe, regulatory bodies are implementing strict limits on the authorised amount of copper that can be used per surface unit per year. For example, in Europe the limit of copper has recently been reduced to 4 kg/ha/year. This is particularly challenging in areas of frequent rainfall, as copper fungicides are prone to washing out of plant leaves or plant fruit, and the natural way to compensate for this, and the reduced performance of copper fungicides is to increase the doses of fungicide. However, with the frequently reducing copper limits, this poses a problem for farmers and growers, as they need to get as much efficacy as possible out of copper containing fungicides.

Bentonite has previously been used as filler or as a carrier for fungicides. The preparation of copper fungicides with bentonite, using a liquid process is described in various patents, such as US2040811A. The bentonite is placed in suspension in an aqueous solution of a copper compound in order to trigger cation exchange. Adversely, this process generates hazardous waste byproducts and is not suitable for commercial application, in part due to the large amounts of water needed.

It is therefore desirable to provide an alternative effective fungicide capable of compensating for the limitations placed on copper use, and to provide a method of making such a fungicide which is industrially applicable, simple and less wasteful.

### SUMMARY OF THE INVENTION

The present invention is defined in the appended claims.

At its most general, the present invention provides a method of forming a particulate composition suitable for use as a fungicide for plant or plant leaf or plant fruit protection. In particular, a method of forming a particulate composition comprising a relatively large amount of bentonite and a relatively small amount of copper, where the particulate composition is an effective fungicide.

In accordance with a first aspect, there is provided a method of forming a particulate composition suitable for use as a fungicide for plant or plant leaf or plant fruit protection, the method comprising the steps of:
a) blending bentonite, a copper compound, optionally water, and optionally a formulation aid to form a paste, wherein the bentonite comprises water, and wherein the weight ratio of the bentonite on a dry basis to elemental copper in the paste is at least about 11;
b) drying the paste until the water content of the paste is below about 15 wt.%; and
c) reducing the size of the dried paste to form particulates, by any method, such as by grinding or milling or crushing or sieving or extrusion or classifying .

As the Examples of the present invention were shown to display, the inventors surprisingly found that a method of forming a particulate composition according to the present invention resulted in an efficient fungicide capable of reducing fungal and bacterial diseases in plants or plant leaf or plant fruit. In particular, the particulate composition was shown to be an effective fungicide for vineyards, and for reducing the intensity and frequency of downy mildew.

Advantageously, the particulate composition was shown to have a higher efficacy with a lower quantity of copper per hectare than some commercially available copper based fungicides.

This was particularly surprising, as within the state of the art, bentonite is only used in solid preparations methods of copper compound fungicides in a low quantity, commonly less than <10 wt.% of bentonite has been typically used. Furthermore, the state of the art actively teaches away from having high quantities of bentonite and suggests high amounts of bentonite would result in loss of active ingredients, and failure to control disease due to poor weathering properties.

For example, in GB786411A it is mentioned that it would be detrimental to use concentrations of bentonite higher than 50%. However, the present inventors surprisingly found that a particulate composition formed according to the method of the present invention was an effective fungicide and reduced both the intensity and frequency of fungal infection in plants or plant leaf or plant fruit.

Furthermore, the present inventors found that a method according to the present invention does not generate the hazardous waste or require the vast amounts of water associated with wet methods of blending copper compounds and bentonite.

In embodiments, the bentonite and copper compound may be blended with water to form a paste. Additionally, the bentonite and copper compound may be blended with a formulation aid to form a paste. In a further embodiment, the bentonite and copper compound may be blended with both water and a formulation aid to form a paste. In embodiments, the formulation aid comprises a plurality of formulation aids such as lignosulfonates, anti-foaming agents, pH adjusting agents or the like. Further examples of formulations aids are described herein.

In accordance with a second aspect, there is provided a method for treating or reducing fungal and bacterial diseases on a plant or plant leaf or plant fruit, the method comprising contacting aerial parts of a plant or plant leaf or plant fruit with the particulate composition prepared by the method according to the first aspect.

In accordance with a third aspect, there is provided a use of the particulate composition prepared by the method according to the first aspect to reduce or treat fungal and bacterial diseases on a plant or plant leaf or plant fruit.

Certain embodiments of the present invention may provide one or more of the following advantages:
- a particulate composition with desired fungicide efficiency;
- reduction in intensity of fungal and bacterial diseases;
- reduction in frequency of fungal and bacterial diseases;
- reduction in the amount of copper needed per year per hectare to provide an effective an agricultural fungicide;
- a fungicide with increased weathering properties;
- increased fungicide retention on plants or plant leaves or plant fruit;
- reduced production of hazardous waste;
- an industrially applicable process;
- a less wasteful process.

The details, examples and preferences provided in relation to any particular one or more of the stated aspects of the present invention apply equally to all aspects of the present invention. Any combination of the embodiments, examples and preferences described herein in all possible variations thereof is encompassed by the present invention unless otherwise indicated herein, or otherwise clearly contradicted by context.

### BRIEF DESCRIPTION OF THE DRAWINGS

The invention will further be illustrated by reference to the following figures:
Figure 1: is a graph showing the intensity and frequency of downy mildew 7 days after contamination in semi-controlled conditions, comparing vines treated by two particulate compositions formed by the method according to the present invention, no treatment and treatment with commercially available fungicides;
Figure 2: is a graph showing the intensity and frequency of downy mildew 11 days after contamination comparing the vine treatments as in Figure 1;
Figure 3: is a graph showing the intensity and frequency of downy mildew 14 days after contamination comparing the vine treatments as in Figures 1 and 2;
Figure 4: is a graph showing the intensity and frequency of downy mildew 2 months present in a first vineyard, comparing vines treated by two particulate compositions formed by the method according to the present invention, no treatment and commercially available fungicides;
Figure 5: is a graph showing the intensity and frequency of downy mildew on grapes 3 months after contamination, comparing the vine treatments as in Figure 4;
Figure 6: is a graph showing the intensity and frequency of downy mildew on vine leaves 3 months after contamination, comparing the vine treatments as in Figures 4 and 5;
Figure 7: is a graph showing the intensity and frequency of downy mildew 47 days after contamination in a second vineyard, comparing vines treated by two particulate compositions formed by the method according to the present invention, no treatment and commercially available fungicides;
Figure 8: is a graph showing the intensity and frequency of downy mildew on grapes 55 days after contamination comparing the vine treatments as in Figure 7;
Figure 9: is a graph showing the intensity and frequency of downy mildew on vine grapes 64 days after contamination comparing the vine treatments as in Figure 7 and 8;
Figure 10: is a graph showing the intensity and frequency of downy mildew 7 days after contamination of healthy vine leaf discs in petri dishes, comparing leaves treated by three particulate compositions formed by the method according to the present invention, no treatment and commercially available fungicide; and
Figure 11: is a graph showing the intensity and frequency of downy mildew 5 days after contamination of healthy vine leaf discs in petri dishes, comparing leaves treated by three particulate compositions formed by the method according to the present invention, no treatment and commercially available fungicide.

It is understood that the following description and references to the figures concern exemplary embodiments of the present invention and shall not be limiting the scope of the claims.

### DETAILED DESCRIPTION

The present invention relates generally to a method of forming a particulate composition suitable for use as a fungicide for plant or plant leaf or plant fruit protection, and a method for treating or reducing fungal and bacterial diseases on a plant or plant leaf or plant fruit and the use of the particulate composition formed to treat or reduce fungal and bacterial diseases on a plant or plant leaf or plant fruit.

The present invention is based on the surprising finding that the method according to the present invention of blending a copper compound and bentonite (the bentonite and the copper compound may intrinsically contain water), optionally water (additional to the water content of the bentonite), and optionally a formulation aid to form a paste (which is defined to mean less than or equal to about 50 wt.% water), which is then dried and grinded, forms a particulate composition with a relatively large amount of bentonite (for example, more than about 30 wt.% or more than about 70 wt.%), and a relatively small amount of copper compound (for example, about 0.025 to about 14 wt.%, or from about 1 to about 6 wt.%), and that such a particulate composition is an effective fungicide. This finding was particularly surprising given the teaching in the state of the art away from compositions with such a large amount of bentonite being able to act as fungicides.

When ranges are used herein, all combinations and sub-combinations of ranges and specific embodiments therein are intended to be included.

As used herein, the term "about" when referring to a number or a numerical range means that the number or numerical range referred to is an approximation within experimental variability (or within statistical experimental error), and thus the number or numerical range may vary. Typical experimental variabilities may stem from, for example, changes and adjustments necessary during scale-up from laboratory experimental and manufacturing settings to large scale, as is known to those familiar with the art of manufacturing. Such changes can vary between 1% and 10% of the stated number or numerical range.

As used herein, the term "comprising" (and related terms such as "comprise" or "comprises" or "having" or "including") has an open meaning and therefore a composition comprising described features may comprise additional components in addition to the described features.

Abbreviations used herein have their conventional meaning within the chemical and biological arts, unless otherwise indicated.

The features described below may be included in any aspect of the present invention as appropriate.

According to the present invention, there is provided a method of forming a particulate composition suitable for use as a fungicide for plant or plant leaf or plant fruit protection, the method comprising the steps of:
a) blending bentonite, a copper compound, optionally water, and optionally a formulation aid to form a paste, wherein the bentonite comprises water, and wherein the weight ratio of the bentonite on a dry basis to elemental copper in the paste is at least about 11;
b) drying the paste until the water content of the paste is below about 15 wt.%; and
c) reducing the size of the dried paste to form particulates, by any method, such as by grinding or milling or crushing or sieving or extrusion or classifying.

In embodiments, bentonite and a copper compound are blended, optionally with water, to form a paste. A paste is herein defined as comprising less than or equal to about 50 wt.% water. In other embodiments, bentonite and a copper compound are blended to form a paste with the addition of water. In other embodiments, bentonite and a copper compound and a formulation aid are blended to form a paste with or without the addition of water. The addition of water may depend on the amount of water/moisture intrinsically present within the bentonite and/or copper compound.

In embodiments, the bentonite and copper compound and optionally the formulation aid may be mixed together prior to the addition of any optional water. In other embodiments, the bentonite, copper compound and water and optionally the formulation aid may all be mixed together at the same time. In other words, the bentonite, a copper compound and the optional water and the optional formulation aid may be added together in any suitable order to form the paste.

### Bentonite

The method of forming a particulate composition suitable for use as a fungicide suitable for plant or plant leaf or plant fruit protection comprises blending bentonite and a copper compound to form a paste.

In some embodiments, the bentonite may be blended with a copper compound and water to form a paste.

In other embodiments, the bentonite may be blended with a copper compound and formulation aid to form a paste. In embodiments, the bentonite may be blended with a copper compound, formulation aid and water to form a paste. Water being used to form the paste may be dictated by the amount of water intrinsically present within the bentonite and/or copper compound. For example, if the bentonite and/or copper compound have suitable amounts of moisture/water intrinsically, no additional water is required to be added to form the paste. However, in other embodiments, additional water may be added to form the paste.

In embodiments, the blended paste comprising bentonite and a copper compound and water (the water originating from the components or optional added water) comprises from about 50 to about 70 wt.% bentonite on a dry basis, based on the total weight of the paste. For example, in some embodiments, the blended paste may comprise from about 55 to about 70 wt.% bentonite on a dry basis, from about 55 to about 65 wt.% bentonite on a dry basis, or from about 57.5 to about 65 wt.% bentonite on a dry basis, based on the total weight of the paste (the paste comprising bentonite, a copper compound and water).

In other embodiments, the blended paste comprising bentonite, a copper compound, water (the water originating from the components or optional added water) and a formulation aid, comprises from about 20 to about 75 wt.% bentonite on a dry basis, based on the total weight of the paste. For example, in such embodiments, the blended paste may comprise from about 25 to about 70 wt.% bentonite on a dry basis, from about 30 to about 65 wt.% bentonite on a dry basis, from about 35 to about 65 wt.% bentonite on a dry basis, from about 40 to about 60 wt.% bentonite on a dry basis, or from about from about 50 to about 60 wt.% bentonite on a dry basis, based on the total weight of the paste (comprising bentonite, a copper compound, water and a formulation aid).

The term "on a dry basis" as used herein refers to the amount of bentonite without moisture or water. For example, for 235 g of a bentonite having a moisture content of 15 wt.%, the bentonite on a dry basis would be equal to 199.75 g.

In some embodiments, the bentonite may, for example, be sodium bentonite, calcium bentonite, magnesium bentonite, or a combination of one or more thereof. Sodium bentonite, calcium bentonite and magnesium bentonite refer to bentonites wherein the majority of the balancing cations are sodium, calcium and magnesium respectively. Sodium bentonite, calcium bentonite and magnesium bentonite may therefore also comprise other balancing cations in addition to the respective sodium or calcium or magnesium cations. In a particular embodiment, the bentonite may be a magnesium calcium bentonite, which refers to a bentonite wherein the majority of the balancing cations are magnesium and calcium.

Calcium bentonite, magnesium bentonite and magnesium calcium bentonite include naturally occurring calcium bentonite, magnesium bentonite and magnesium calcium bentonite, as well as calcium bentonite, magnesium bentonite and magnesium calcium bentonite formed by cation replacement.

Sodium bentonite includes naturally occurring sodium bentonite and sodium bentonite formed by replacing cations such as calcium, potassium or magnesium in naturally occurring bentonite with sodium cations, for example by soda ash activation. This may be referred to as sodium-activated bentonite. Soda ash activation may, for example, comprise addition of soda ash powder (sodium carbonate) to a bentonite having a moisture content of at least about 20 wt.%, for example at least about 22 wt.% or at least about 30 wt.% or at least about 35 wt.%, and mixing, for example, by extrusion or kneading. The bentonite may then be dried and milled to a powder having a desired particle size distribution.

In a particular embodiment, the bentonite may comprise a natural smectite. The bentonite may comprise a natural smectite comprising sodium and/or calcium and/or magnesium, preferably, the bentonite may comprise a natural smectite comprising calcium and magnesium. Smectite has a 2:1 layer silicate structure that can expand & contract upon wetting and drying. It has two tetrahedral sheets with Si-O tetrahedra surrounding a central octahedral sheet consisting of Mg, Fe, Al and OH-groups. The interlayers of natural smectites are commonly occupied by a mixture of Na⁺ and/or Ca²⁺ and Mg²⁺, however the cations may be exchanged. Smectite clay is a group of phyllosilicate clay minerals which includes, for example, montmorillonite, beidellite, nontronite, saponite and hectorite. These may, for example, be differentiated by variations in chemical composition, for example involving substitutions of Al for Si in tetrahedral cation sites and/or Al, Fe, Mg and Li in octahedral cation sites. Smectite clays have a variable net negative charge, which may be balanced by one or more cations such as sodium, calcium, potassium, magnesium, aluminium and/or hydrogen adsorbed externally of interlamellar surfaces. The specific cations present in the smectite clay may vary depending on where the smectite clay was obtained from. However, smectite clay commonly includes a mixture of cations, for example a mixture of trivalent, bivalent and monovalent cations. The smectite clays may, for example, comprise (e.g. comprise only) a mixture of monovalent and bivalent cations. Smectite clay may, for example, be dioctahedral or trioctahedral.

In an embodiment, the bentonite may comprise montmorillonite. For example, the bentonite may comprise montmorillonite, gypsum, quartz, calcite and anatase.

### Copper Compound

A copper compound is blended with bentonite to form a paste.

In some embodiments, the copper compound may be blended with bentonite and water to form a paste. In some embodiments, the copper compound may be blended with bentonite, water and a formulation aid to form a paste. In other embodiments, the copper compound may be blended with bentonite and a formulation aid to form a paste.

The copper compound may be any suitable compound which contains copper.

In some embodiments, the copper compound may be selected from: copper sulphate (CuSO₄, CuSO₄•5H₂O), copper chloride (CuCl₂), copper hydroxide Cu(OH)₂, copper oxides (Cu₂O, CuO, Cu₄O₃), copper oxychloride (Cu₂(OH)₃Cl), copper octanoate (C₁₆H₃₀CuO₄) or combinations thereof. In a preferred embodiment, the copper compound is CuSO₄•5H₂O. The use of CuSO₄•5H₂O may be beneficial, as it is a relatively safe compound to use. Therefore, the use of CuSO₄•5H₂O may make the method more industrially applicable.

In embodiments, the blended paste comprising bentonite, copper compound and water (the water originating from the components or optional added water) comprises from about 0.025 to about 14 wt.% of copper compound, based on the total weight of the paste. For example, in such embodiments, the blended paste may comprise from about 0.1 to about 14 wt% of copper compound, from about 0.5 to about 14 wt.% of copper compound, from about 1 to about 14 wt.% of copper compound, from about 1.5 to about 12.5 wt.% of copper compound, or from about 2 to about 10 wt.% of copper compound, from about 3 to about 7.5 wt.% of copper compound, from about 4 to about 7 wt.% of copper compound, from about 5 to about 6.5 wt.% of copper compound, or from about 5.5 to about 6 wt.% of copper compound, based on the total weight of the paste (the paste comprising bentonite, copper compound and water).

In embodiments, the blended paste comprising bentonite, copper compound and water (the water originating from the components or optional added water) comprises from about 0.05 to about 2.5 wt.% of elemental copper, based on the total weight of the paste (comprising bentonite, copper compound and water). For example, in such embodiments, the blended paste may comprise from about 1 to about 2.5 wt.% of elemental copper, from about 1.25 to about 2 wt.% of elemental copper, or from about 1.4 to about 1.6 wt.% of elemental copper, based on the total weight of the paste (the paste comprising bentonite, copper compound and water).

In alternative embodiments, the blended paste comprising bentonite, copper compound, water (the water originating from the components or optional added water) and a formulation aid comprises from about 0.025 to about 14 wt.% of copper compound, based on the total weight of the paste. For example, in such embodiments, the blended paste may comprise from about 0.05 to about 14 wt.% of copper compound, from about 0.1 to about 14 wt.% of copper compound, from about 0.25 to about 12.5 wt.% of copper compound, or from about 0.5 to about 10 wt.% of copper compound, from about 1 to about 7.5 wt.% of copper compound, from about 1.5 to about 7 wt.% of copper compound, from about 2 to about 6.5 wt.% of copper compound, or from about 2.5 to about 6 wt.% of copper compound, based on the total weight of the paste (the paste comprising bentonite, copper compound, water and formulation aid).

In alternative embodiments, the blended paste comprising bentonite, copper compound, water and a formulation aid comprises from about 0.01 to about 2.5 wt.% of elemental copper, based on the total weight of the paste (comprising bentonite, copper compound, water and formulation aid). For example, in such embodiments, the blended paste may comprise from about 0.025 to about 2.5 wt.% of elemental copper, from about 0.05 to about 2 wt.% of elemental copper, or from about 0.075 to about 1.6 wt.% of elemental copper, based on the total weight of the paste (the paste comprising bentonite, copper compound, water and formulation aid).

### Water

The blended paste comprising bentonite and a copper compound comprises from about 20 to about 50 wt.% of water, based on the total weight of the paste. For example, in embodiments, the blended paste may comprise from about 22.5 to about 37.5 wt.% of water, or from about 25 to about 35 wt.% of water, or from about 27.5 to about 32.5 wt.% of water, based on the total weight of the paste.

In alternative embodiments, the blended paste comprising bentonite, a copper compound and a formulation aid comprises from about 20 to about 50 wt.% of water, based on the total weight of the paste. For example, in embodiments, the blended paste may comprise from about 22.5 to about 37.5 wt.% of water, or from about 25 to about 35 wt.% of water, or from about 27.5 to about 32.5 wt.% of water, based on the total weight of the paste.

Water may optionally be blended with the bentonite and copper compound and optionally the formulation aid to form a paste. In other words, water may be added to the bentonite and copper compound, and optional formulation aid to form a paste. Alternatively, the water present in the paste may be from intrinsic moisture within the bentonite. For example, in embodiments, the bentonite may comprise at least about 10 wt.% water, or at least about 15 wt.% water, or at least 20 wt.% water, or at least about 25 wt.% water, or at least about 30 wt.% of water. For example, in a specific embodiment, the bentonite may comprise about 35% water. In other words, in embodiments, the water present in the blended paste may originate from the bentonite itself, and no extra water is added to the bentonite, copper compound and optional formulation aid. The wate r present in the paste may also be from intrinsic moisture within the copper compound.

In another alternative embodiment, the water in the paste is from both the intrinsic moisture within the bentonite and added water. For example, a bentonite may comprise at least about 10 wt.% water, and additional water may be added to the bentonite and copper compound such that the blended paste comprising bentonite, copper compound and water comprises from about 20 to about 50 wt.% of water. In other words, if the bentonite does not have enough intrinsic moisture to result in a paste comprising from about 20 to about 50 wt.% of water when blended with a copper compound, additional water may be added to result in such a paste. In embodiments, where the formulation aid is blended with copper compound and bentonite, additional water may be added to the bentonite, copper compound and formulation aid such that the blended paste comprising bentonite, copper compound and water comprises from about 7.5 to about 50 wt.% of water.

The amount of additional water to be used to blend the bentonite and copper compound into a paste can be calculated according to the following equation: $Amount of added water = \left(\frac{\left(100-bentonite moisture\right) ∗ bentonite mass}{70}\right) - bentonite mass$ wherein the bentonite moisture is calculated by measuring the initial mass of bentonite and drying it overnight at 105 °C. The difference between the original mass and the mass after drying divided by the original mass, gives the percentage of the moisture content.

In embodiments, water is separately blended with the bentonite and copper in step a) of the method.

### Formulation Aid

A formulation aid (as described herein below) may optionally be blended with bentonite and a copper compound, and optional water, to form a paste.

The formulation aid may be selected from, but is not limited to: surfactants, anti-foaming agent, lignosulfonates, mineral charges, dispersants, solvents, emulsifiers, fillers, wetting agents, emollients, diluents, preservatives, UV absorbers, antioxidants, stickers, humectants, spreaders, antifoaming agents, thickeners, rheology modifiers, suspensive aids, drift reducing agents, water buffers, pH adjusting agents, water softeners, pigments, dyes, anti-evaporating agents, carriers, anti-caking agents, penetration enhancers, water conditioners or any combination thereof.

The formulation aid may preferably be selected from: anti-foaming agents, pH adjusting agents, lignosulfonates, mineral charges, surfactants, dispersants, solvents, emulsifiers, fillers, wetting agents, emollients, diluents or any combination thereof.

In embodiments, the blended paste comprising bentonite, copper compound, water and formulation aid comprises from about 0.5 to about 60 wt.% of formulation aid, based on the total weight of the paste. For example, in such embodiments, the blended paste may comprise from about 1 to about 55 wt.% of formulation aid, from about 2.5 to about 50 wt.% of formulation aid, from about 5 to about 45 wt.% of formulation aid, from about 7.5 to about 40 wt.% of formulation aid, from about 10 to about 35 wt.% of formulation aid, from about 15 to about 30 wt.% of formulation aid, from about 20 to about 25 wt.% of formulation aid. In some embodiments, the blended paste may comprise from about 1 to about 25 wt.% of formulation aid, for example, the blended paste may comprise from about 2.5 to about 20 wt.% of formulation aid, or from about 5 to about 15 wt.% of formulation aid, or from about 7.5 to about 12.5 wt.% of formulation aid.

### Weight Ratio

The weight ratio of the bentonite on a dry basis to elemental copper in the blended paste is at least about 8, or at least about 9, or at least about 10, or at least about 11, or at least about 12, or at least about 15, or at least about 20, or at least about 35, or at least about 40, or at least about 45, or at least about 50, or at least about 60 or at least about 65. In embodiments, the weight ratio of the bentonite on a dry basis to elemental copper in the blended paste is from about 8 to about 1400, or from about 11 to about 100, or from about 15 to about 80, or from about 20 to about 60.

A weight ratio of bentonite on a dry basis to elemental copper of at least 11 may be beneficial as it may result in particulates with a higher bentonite to copper ratio, which is beneficial as the copper content is reduced.

### Blending

Bentonite and a copper compound are blended to form a paste.

Optionally, bentonite, a copper compound and water are blended to form a paste.

Optionally, bentonite, a copper compound and a formulation aid are blended to form a paste.

Optionally, bentonite, a copper compound, a formulation aid and water are blended to form a paste.

Blending of the bentonite and copper compound optionally water, and optionally a formulation aid may be achieved using any suitable method which forms a paste. For example, the bentonite, copper compound and optional water may be blended to form a paste using a knead mixer, an end runner mill, a pin mixer, a pug mill, a pan mixer, a paddle mixer, a rotary drum mixer, a ribbon mixer, a cone screw mixer, a vibratory mixer, a conical mixer, a ploughshare mixer, a planetary mixer, a mix muller, or an extruder.

Preferably, the blending of the bentonite, copper compound, optional water and optional formulation aid results in a homogenous mixture.

In a preferred embodiment, the blending may comprise extrusion. The extrusion process may be repeated, for example, the extrusion process may be performed once, twice or thrice to provide a blend comprising the bentonite, copper compound and optional water. Extrusion may beneficially allow for a large volume of the particulate composition to be prepared, and therefore may be more industrially suitable.

In an alternative embodiment, the blending may comprise knead mixing.

In an embodiment, the bentonite, copper compound and optional water may be blended to form a paste comprising bentonite, copper compound and water, as described herein, and then formulation aid may be added to said paste, and the formulation aid and paste mixture blended to form a paste comprising bentonite, copper compound, water and a formulation aid, as described herein.

### Drying

The paste is dried until the water content of the paste is below or equal to about 15 wt.%, measured as described herein. For example, in some embodiments, the paste is dried until the water content of the paste is below or equal to about 14 wt.%, or until the water content of the paste is below or equal to about 13 wt.%, or below or equal to about 12 wt.% or below or equal to about 11 wt.%, or below or equal to about 10 wt.%. In embodiments, the paste is dried until the water content is between about 8 wt.% to about 15 wt.%, about 9 wt.% to about 12 wt.%, or about 9.5 to about 10.5 wt.%.

The paste may be dried using any suitable drying technique and equipment. In an embodiment, the paste is dried at a temperature between about 60 to about 700 °C. For example, the paste may be dried at a temperature between about 80 to about 200 °C.

### Particle Size Reduction

The dried paste is subjected to size reduction to form particulates, by any method, such as by grinding or milling or crushing or sieving or extruding, or classifying, to a particle size up to about 5 mm.

Extrusion may be used both to blend the bentonite, a copper compound, and optionally water, and optionally a formulation aid to form a paste, and as a size reduction method to form particulates.

### Particulate Composition

In embodiments, the particulates formed from the blending, drying and size reduction of the paste comprise bentonite, elemental copper and at most about 15 wt.% water, based on the total weight of the particulates, wherein the weight ratio of the bentonite to elemental copper is at least about 11.

In embodiments, the particulates formed from the blending, drying and size reduction of the paste comprise:
about 30 to about 99 wt.% bentonite, on a dry basis, based on the total weight of the particulates;
about 0.1 to about 6 wt.% elemental copper, based on the total weight of the particulates;
optionally, about 0.1 to about 55 wt.% formulation aid, based on the total weight of the particulates;
at most about 15 wt.% water, based on the total weight of the particulates; and
wherein the weight ratio of the bentonite on a dry basis to elemental copper is at least about 11.

In some embodiments, the particulates may comprise from about 30 wt.% to about 99 wt.%, or from about 75 to about 99 wt.% bentonite, on a dry basis, based on the total weight of the particulates, for example, from about 77.5 to about 90 wt.% bentonite on a dry basis, based on the total weight of the particulates, or from about 80 to about 85 wt.% bentonite on a dry basis, based on the total weight of the particulates.

In some embodiments, the particulates may comprise from about 0.1 to about 6 wt.% elemental copper, based on the total weight of the particulates, for example, from about 0.5 to about 6 wt.% elemental copper, based on the total weight of the particulates, or from about 1 to about 6 wt.% elemental copper, based on the total weight of the particulates, or from about 1.5 to about 5 wt.% elemental copper, based on the total weight of the particulates, or from about 1.75 to about 2.25 wt.% elemental copper, based on the total weight of the particulates.

In some embodiments, the particulates may comprise from about 0.4 to about 22 wt.% copper compound, based on the total weight of the particulates, for example, from about 2 to about 20 wt.% copper compound, based on the total weight of the particulates, or from about 5 to about 15 wt.% copper compound, based on the total weight of the particulates, or from about 7.5 to about 10 wt.% copper compound, based on the total weight of the particulates.

In embodiments, the particulates may comprise at most about 15 wt.% water. For example, in some embodiments, the particulates may comprise below or equal to about 14 wt.% water, below or equal to about 13 wt.% water, below or equal to about 12 wt.% water, below or equal to about 11 wt.% water, or below or equal to about 10 wt.% water. In embodiments, the particulates may comprise between about 8 wt.% to about 15 wt.% water, about 9 wt.% to about 12 wt.% water, or about 9.5 to about 10.5 wt.% water.

In embodiments, the particulates may comprise from about 0.1 to about 60, or from about 10 to about 40, or from about 20 to about 30 wt.% formulation aid, based on the total weight of the particulates, for example, from about 0.1 to about 55, or from about 0.1 to about 50, or from about 0.1 to about 40. or from about 0.1 to about 30, or from about 0.1 to about 20, or from about 0.1 to about 10, or from about 0.1 to about 5, or from about 0.1 to about 2, or from about 0.1 to about 1 wt.% formulation aid, based on the total weight of the particulates.

In embodiments, the weight ratio of the bentonite on a dry basis to elemental copper in the particulates is at least about 8, or at least about 9, or at least about 10, or at least about 11, or at least about 12, or at least about 15, or at least about 20, or at least about 35, or at least about 40, or at least about 45, or at least about 50, or at least about 60 or at least about 65, or from about 8 to about 1400, or from about 11 to about 100, or from about 15 to about 80, or from about 20 to about 60.

### Method of Use

The present invention also provides a method for treating or reducing fungal and/or bacterial diseases on a plant or plant leaf or plant fruit comprising contacting aerial parts of a plant or plant leaf or plant fruit with the particulate composition prepared by the method according to the present invention.

The particulate composition according to the present invention may be contacted with the aerial parts of a plant or plant leaf or plant fruit to reduce or treat fungal and bacterial diseases on a plant or plant leaf or plant fruit including, but not limited to: citrus, such as lemon or orange, field crops, such as oats or wheat, small fruits such as blackberry and raspberry, vegetables such as broccoli and cabbage, ornamentals, such as bulbs and rose, and vines, such as grapes and hops. In a preferred embodiment, the plant is a vine.

The particulate composition may be used to reduce or treat fungal and bacterial diseases on a plant or plant leaf or plant fruit. For example, the particulate composition may be contacted with the aerial parts of a plant to reduce or treat fungal and bacterial diseases on a vine leaf or on the grape. In embodiments, the method is for treating or reducing fungal and/or bacterial diseases on a plant or plant leaf or plant fruit. In an embodiment, the fungal and/or bacterial disease can include, but is not limited to, any one or more of the following: downy mildew, powdery mildew, botrytis, oidiums, esca, phomopsis, black rot, scabs (venturia), black spots, greasy spot, brown rots (molinia), peach leaf curl, anthracnose, black sigatoka, fusariums, phytophthora infestans, polystigma, fire blight (erwinia), xanthomonas, pseudomonas.

In a preferred embodiment, the present invention provides a method for treating or reducing fungal diseases on a vine comprising contacting aerial parts of a vine leaf with the particulate composition prepared by the method according to the present invention.

### Use

The particulate composition according to the present invention may be used to reduce or treat fungal and/or bacterial diseases on a plant or plant leaf or plant fruit. For example, the particulate composition may be used to reduce or treat fungal and/or bacterial diseases such as mildew.

The particulate composition according to the present invention may be used to reduce or treat fungal and bacterial diseases on a plant or plant leaf or plant fruit including, but not limited to: citrus, such as lemon or orange, field crops, such as potatoes, oats or wheat, small fruits such as blackberry and raspberry, vegetables such as broccoli and cabbage, ornamentals, such as bulbs and rose, and vines, such as grapes and hops.

The particulate composition may be used to reduce or treat fungal and bacterial diseases on a plant or plant leaf or plant fruit. For example, the particulate composition may be used to reduce or treat fungal and bacterial diseases on a vine leaf or on the grape.

In an embodiment, the particulate composition may be used to reduce or treat mildew.

In an embodiment, the particulate composition may be used to reduce or treat fungal and/or bacterial diseases as listed above on vines.

### Formulation

In embodiments, the method of forming a particulate composition suitable for use as a fungicide for plant or plant leaf or plant fruit protection comprises post-adding a formulation aid to the particulates as described above which are prepared from a blended paste without the optional formulation aid.

The formulation aid may be selected from, but is not limited to: surfactants, dispersants, solvents, emulsifiers, fillers, wetting agents, emollients, diluents, preservatives, UV absorbers, antioxidants, stickers, humectants, spreaders, antifoaming agents, thickeners, rheology modifiers, suspensive aids, drift reducing agents, water buffers, pH adjusting agents, water softeners, pigments, dyes, anti-evaporating agents, carriers, anti-caking agents, penetration enhancers, water conditioners or any combination thereof.

The formulation aid may preferably be selected from: a surfactant, dispersant, solvent, emulsifier, filler, wetting agent, emollient, diluent or any combination thereof.

A formulation of the particulate composition may be prepared for applying the particulate composition to a plant or plant leaf or plant fruit.

The formulation may be applied to the aerial parts of a plant or plant leaf or plant fruit to reduce or treat fungal and bacterial diseases.

In some embodiments, the formulation may be applied as a liquid (typically water), powder, or paste to the aerial parts of a plant or plant leaf or plant fruit.

The formulation may comprise any one or combination of the formulation aids discussed herein, and either incorporated into the particulates during the blending, or post-added to the particulates, or both.

Beneficially, a surfactant or dispersant may help reduce the risk of sedimentation. A water conditioner may help to avoid flocculation.

In some embodiments, the amount of elemental copper used as a fungicide for plant or plant leaf, or plant fruit protection is less than 4 kg Cu/ha per annum.

### Embodiments

In some embodiments, the present invention provides a method of forming a particulate composition suitable for use as a fungicide for plant or plant leaf or plant fruit protection, the method comprising the steps of:
a) blending bentonite, a copper compound, and optionally water, to form a paste, wherein the bentonite comprises water, and wherein the paste comprises:
   i) about 50 to about 70 wt.% bentonite on dry basis, based on the total weight of the paste;
   ii) about 1 to about 2.5 wt.% of elemental copper, based on the total weight of the paste;
   iii) about 25 to about 35 wt.% water, based on the total weight of the paste;
   iv) wherein the weight ratio of the bentonite to elemental copper is at least about 11;
b) drying the paste until the water content of the paste is below about 15 wt.%; and
c) reducing the size of the dried paste to form particulates, by any method, such as by grinding or milling or crushing or sieving or extrusion or classifying.

In some embodiments, the present invention provides a method of forming a particulate composition suitable for use as a fungicide for plant or plant leaf or plant fruit protection, the method comprising the steps of:
a) blending bentonite, a copper compound, optionally water, and optionally a formulation aid, to form a paste, wherein the bentonite comprises water, and wherein the paste comprises:
   i) about 25 to about 35 wt.% bentonite on dry basis, based on the total weight of the paste;
   ii) about 3 to about 5 wt.% of copper compound, based on the total weight of the paste;
   iii) about 10 to about 15 wt.% water, based on the total weight of the paste;
   iv) optionally, about 45 to about 55 wt.% formulation aid, based on the total weight of the paste;
   v) wherein the weight ratio of the bentonite to elemental copper is at least about 11;
b) drying the paste until the water content of the paste is below about 15 wt.%; and
c) reducing the size of the dried paste to form particulates, by any method, such as by grinding or milling or crushing or sieving or extrusion or classifying.

In some embodiments, the present invention provides a method of forming a particulate composition suitable for use as a fungicide for plant or plant leaf or plant fruit protection, the method comprising the steps of:
a) blending bentonite, a copper compound, optionally water, and optionally a formulation aid, to form a paste, wherein the bentonite comprises water, and wherein the paste comprises:
   i) about 50 to about 70 wt.% bentonite on dry basis, based on the total weight of the paste;
   ii) about 5 to about 7.5 wt.% of copper compound, based on the total weight of the paste;
   iii) about 10 to about 15 wt.% water, based on the total weight of the paste;
   iv) optionally, about 15 to about 25 wt.% formulation aid, based on the total weight of the paste;
   v) wherein the weight ratio of the bentonite to elemental copper is at least about 11;
b) drying the paste until the water content of the paste is below about 15 wt.%; and
c) reducing the size of the dried paste to form particulates, by any method, such as by grinding or milling or crushing or sieving or extrusion or classifying.

In some embodiments, the present invention provides a method of forming a particulate composition suitable for use as a fungicide for plant or plant leaf or plant fruit protection, the method comprising the steps of:
a) blending bentonite, a copper compound, optionally water, and optionally a formulation aid, to form a paste, wherein the bentonite comprises water, and wherein the paste comprises:
   i) about 50 to about 70 wt.% bentonite on dry basis, based on the total weight of the paste;
   ii) about 1 to about 2.5 wt.% of elemental copper, based on the total weight of the paste;
   iii) about 25 to about 35 wt.% water, based on the total weight of the paste;
   iv) optionally, about 5 to about 60 wt.% formulation aid, based on the total weight of the paste;
   v) wherein the weight ratio of the bentonite to elemental copper is at least about 11;
b) drying the paste until the water content of the paste is below about 15 wt.%; and
c) reducing the size of the dried paste to form particulates, by any method, such as by grinding or milling or crushing or sieving or extrusion or classifying.

In some embodiments, the present invention provides a method of forming a particulate composition suitable for use as a fungicide for plant or plant leaf or plant fruit protection, the method comprising the steps of:
a) blending bentonite, a copper compound, and optionally water, to form a first paste, wherein the bentonite comprises water, and wherein the first paste comprises:
   i) about 50 to about 70 wt.% bentonite on dry basis, based on the total weight of the paste;
   ii) about 1 to about 2.5 wt.% of elemental copper, based on the total weight of the paste;
   iii) about 25 to about 35 wt.% water, based on the total weight of the paste;
   iv) wherein the weight ratio of the bentonite to elemental copper in the paste is at least about 11;
b) adding a formulation aid to the first paste, and blending to form a second paste
c) drying the second paste until the water content of the second paste is below about 15 wt.%; and
d) reducing the size of the dried paste to form particulates, by any method, such as by grinding or milling or crushing or sieving or extrusion or classifying.

In some embodiments, the present invention provides a method of forming a particulate composition suitable for use as a fungicide for plant or plant leaf or plant fruit protection, the method comprising the steps of:
a) blending bentonite, a copper compound, and optionally water, to form a first paste, wherein the bentonite comprises water, and wherein the first paste comprises:
   i) about 50 to about 70 wt.% bentonite on dry basis, based on the total weight of the paste;
   ii) about 1 to about 2.5 wt.% of elemental copper, based on the total weight of the paste;
   iii) about 25 to about 35 wt.% water, based on the total weight of the paste;
   iv) wherein the weight ratio of the bentonite to elemental copper in the paste is at least about 11;
b) adding a formulation aid to the first paste, and blending to form a second paste
c) drying the second paste until the water content of the second paste is below about 15 wt.%; and
d) reducing the size of the dried paste to form particulates, by any method, such as by grinding or milling or crushing or sieving or extrusion or classifying;
wherein about 5 to about 60 wt.% of formulation aid is added to the first paste, based on the total weight of the second paste.

In some embodiments, the present invention provides a method of forming a particulate composition suitable for use as a fungicide for plant or plant leaf or plant fruit protection, the method comprising the steps of:
a) blending bentonite, a copper compound, and optionally water, to form a first paste, wherein the bentonite comprises water, and wherein the first paste comprises:
   i) about 55 to about 65 wt.% bentonite on dry basis, based on the total weight of the paste;
   ii) about 1.25 to about 2 wt.% of elemental copper, based on the total weight of the paste;
   iii) about 25 to about 35 wt.% water, based on the total weight of the paste;
   iv) wherein the weight ratio of the bentonite to elemental copper in the paste is at least about 26;
b) adding a formulation aid to the first paste, and blending to form a second paste
c) drying the second paste until the water content of the second paste is below about 15 wt.%; and
d) reducing the size of the dried paste to form particulates, by any method, such as by grinding or milling or crushing or sieving or extrusion or classifying.

In some embodiments, the present invention provides a method of forming a particulate composition suitable for use as a fungicide for plant or plant leaf or plant fruit protection, the method comprising the steps of:
a) blending bentonite, a copper compound, and optionally water, to form a first paste, wherein the bentonite comprises water, and wherein the first paste comprises:
   i) about 55 to about 65 wt.% bentonite on dry basis, based on the total weight of the paste;
   ii) about 1.25 to about 2 wt.% of elemental copper, based on the total weight of the paste;
   iii) about 25 to about 35 wt.% water, based on the total weight of the paste;
   iv) wherein the weight ratio of the bentonite to elemental copper in the paste is at least about 26;
b) adding a formulation aid to the first paste, and blending to form a second paste
c) drying the second paste until the water content of the second paste is below about 15 wt.%; and

reducing the size of the dried paste to form particulates, by any method, such as by grinding or milling or crushing or sieving or extrusion or classifying
wherein about 5 to about 60 wt.% of formulation aid is added to the first paste, based on the total weight of the second paste.

In embodiments, a blended paste comprising bentonite, copper compound and water may be termed "a first paste", and a blended paste comprising bentonite, copper compound, a formulation aid and water may be termed "a second paste".

In certain embodiments, the composition may have one or more of the following effects:
- desired fungicide efficiency;
- reduction in intensity of fungal and bacterial diseases;
- reduction in frequency of fungal and bacterial diseases;
- desired ease of preparation;
- reduction in the amount of copper needed per year per hectare to provide an effective agricultural fungicide;
- increased weathering properties;
- increased fungicide retention on plants or plant leaves or plant fruit;
- reduced production of hazardous waste;
- reduced resource waste.

### EXAMPLES

The following illustrates examples of the method of forming a particulate composition, the use of a particulate composition according to the present invention, and related aspects described herein. Thus, these examples should not be considered to restrict the present disclosure, but are merely in place to teach how to carry out the present disclosure.

### Preparation of particulate compositions suitable for use as a fungicide

### Examples 1 to 4

Particulate compositions were prepared according to the present invention. The components for each paste are noted in Table 1. Four particulate compositions were prepared using a Bentonite A and a Bentonite B, according to the following steps:

### Step 1:

The bentonite used as Bentonite A was a Na bentonite, the bentonite used as Bentonite B was a natural Mg/Ca bentonite. The bentonite and CuSO₄•5H₂O were weighed out in the amounts according to Table 1 and combined.

### Step 2:

The amount of deionized water noted in Table 1 was added to the bentonite and CuSO₄•5H₂O mixtures of Examples 1 and 2, no water was added to Examples 3 and 4, using Bentonite B, as the moisture content of Bentonite B was 35.5%, while the moisture content of Bentonite A was 15%.

### Step 3:

### Examples 1 and 3

The bentonite and CuSO₄•5H₂O, and optional water were blended to form a paste by passing the mixture through a CALEVA variable density laboratory screw extruder twice at room temperature, 52 rpm and through 7mm die holes.

### Examples 2 and 4

The bentonite and CuSO₄•5H₂O, and optional water were blended to form a paste using a knead mixer. The mixer is equipped with a bowl having a 35cm diameter and a depth of 13cm, a cylindrical movable weight having a 16cm diameter which moves up and down vertically along the wall of the bowl and also rotates about its central axis, and is otherwise stationary within the bowl. The cylindrical movable weight is used for compressing the paste within the bowl. A scrubber of 9cm in length is positioned vertically along the wall of the bowl, offset from the position of the cylindrical movable weight and serves to scrape the paste from the wall for access by the cylindrical movable weight. The bowl was rotated at 80rpm in ambient conditions, and the cylindrical movable weight was rotated at 80 rpm as well.

The composition of each of the pastes is detailed in Table 2 below.

### Step 4:

Each of the extruded pastes was then sealed for 24 hours.

### Step 5:

After 24 hours, each paste was dried in an oven at 105 °C until the moisture content was reduced to 12 wt.%.

### Step 6:

The dried pastes were then milled using a Retsch ZM300 milling system, to a granulometry of +200 MESH (75 microns) = 10-15% to form four particulate compositions.

**Table 1 - Components of each paste**

| Example | Bentonite | Amount of bentonite, g | Moisture content of the bentonite, % | Amount of CuSO₄•5H₂O, g | Amount of water added, g |
|---|---|---|---|---|---|
| 1 | A | 235 | 15 | 24.84 | 50.36 |
| 2 | A | 235 | 15 | 24.84 | 50.36 |
| 3 | B | 479 | 35.5 | 30.10 | 0 |
| 4 | B | 479 | 35.5 | 30.10 | 0 |

**Table 2 - Composition of each paste**

| Paste | wt.% dry bentonite | wt.% CuSO₄•5H₂O | wt.% elemental copper | wt.% water (added water + water from bentonite - but excluding water from the CuSO₄•5H₂O) | Weight ratio of bentonite to elemental copper |
|---|---|---|---|---|---|
| Example 1 | 64.4 | 8.0 | 2.0 | 27.6 | 32.2 |
| Example 2 | 64.4 | 8.0 | 2.0 | 27.6 | 32.2 |
| Example 3 | 60.7 | 5.9 | 1.5 | 33.4 | 41.1 |
| Example 4 | 60.7 | 5.9 | 1.5 | 33.4 | 41.1 |

Examples 1 to 4 all formed suitable pastes and particulates. The present inventors found both knead mixing and extrusion were suitable for blending the paste components.

### Use of particulate composition as a fungicide

### Examples 5 and 6

To investigate the fungicide properties of the particulate compositions prepared according to the present invention, two particulate compositions, Example 5 and Example 6, according to the present invention were tested on one year old Grenache potted plants in semi-controlled conditions (artificial contamination and system programmable sprinkler) in a tunnel system. A commercially available reference product, Bordeaux mixture, was also tested. A typical Bordeaux mixture can have equal amounts by weight of copper sulfate and slaked lime. An untreated control was also used.

The bentonite used for Example 5 was a Na Bentonite, the bentonite used for Example 6 was a natural Mg/Ca Bentonite.

Example 5 and Example 6 were made using the method detail above for Examples 1 to 4, the respective bentonites were mixed with CuSO₄•5H₂O, and then blended using a knead mixer, dried and granulated.

**Table 3 - Components of each paste**

| Example | Bentonite type | Amount of bentonite, g | Moisture content of the bentonite, % | Amount of CuSO₄•5H₂O, g | Amount of water added, g |
|---|---|---|---|---|---|
| Example 5 | Na | 228 | 12 | 19.48 | 58.63 |
| Example 6 | Mg/Ca | 330 | 38.5 | 19.48 | 0 |

**Table 4 - Composition of each dried particulate**

| Example | wt.% dry bentonite | wt.% elemental copper | wt.% water | Weight ratio of bentonite to elemental copper |
|---|---|---|---|---|
| Example 5 | 82.06 | 2.03 | 9.98 | 40.48:1 |
| Example 6 | 82.09 | 2.00 | 10.03 | 40.95:1 |

The composition of the bentonites used in Example 5 and Example 6 is shown below in Table 5.

**Table 5 - Bentonite compositions**

| | SiO₂ (%) | Al₂O₃ (%) | TiO₂ (%) | Fe₂O₃ (%) | MgO (%) | CaO (%) | Na₂O (%) | K₂O (%) | LOI (%) |
|---|---|---|---|---|---|---|---|---|---|
| Bentonite used for Example 5 | 48.7 | 17.8 | 2.2 | 10.4 | 2.3 | 3.2 | 4.8 | 0.7 | 9.8 |
| Bentonite used for Example 6 | 50.6 | 20.4 | 2.6 | 11.8 | 1.7 | 1.8 | 0.1 | 0.8 | 10.2 |

A 2 kg/ha dose of Bordeaux mixture, and 7 kg/ha doses of Example 5 and Example 6 were applied to the plants using a jet backpack spray type SOLO 417. The dosage of each product can be found in Table 6.

**Table 6 - Composition of applied products**

| Name | Dose | Cu content | Cu per hectare |
|---|---|---|---|
| Bordeaux mixture | 2 kg/ha | 200 g/kg | 400 g/ha |
| Example 5 | 7 kg/ha | 20.3 g/kg | 142.1 g/ha |
| Example 6 | 7 kg/ha | 20 g/kg | 140 g/ha |

The control plants had no fungicides sprayed on them. On day 1, a first dose of each fungicide was applied, on day 9 another dose was applied. On day 10, the plants were artificially contaminated with Plasmopara viticola. To maintain constant humidity to promote germination of spores, several sprays took place during the period of the test.

The plants were examined optically in accordance with Method No. 7 of the French Commission des Essais Biologiques, France, evaluating on each optical examination the frequency of the appearance of the disease on the leaves (number of contaminated leaves) and the intensity of the attack (the percentage of the surface of the leaf covered by the disease). Both values were expressed in percentages. The data were further analysed by using Analysis of variance (ANOVA), Dunnett's test and Newman-Keuls method at a 5% threshold, which includes grouping the results into statistical groups, such as A, B and C.

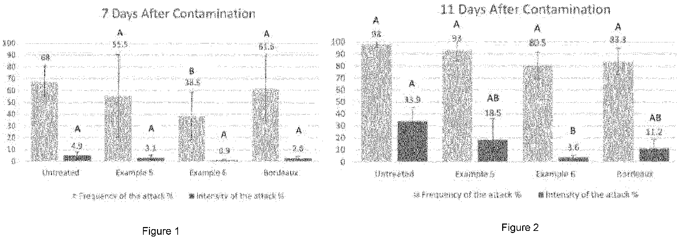

On day 17, 7 days after artificial contamination, the plants were examined optically as described above. As shown in Figure 1, 68% of untreated leaves were shown to be affected by downy mildew, and the attack intensity was shown to be 4.9%. For the treated plants, regarding the intensity, from a statistical point of view, all solutions showed a similar performance (all results belong to statistical group A). Regarding the frequency of the attack, Example 6 showed a clear efficiency on reducing the frequency of the mildew attack as only 38.5% of the leaves showed traces of mildew compared to 61.6% for the plants treated with the standard solution of the Bordeaux mixture.

On day 21, 11 days after artificial contamination, the plants were re-examined. As shown in Figure 2, 98% of the leaves of the untreated plants were affected by mildew, and the attack intensity was 33.9%. Statistically, Example 6 was shown to differ significantly from the untreated plants and to reduce the intensity of the attack of downy mildew, followed by Example 5 and Bordeaux mixture which showed similar performance.

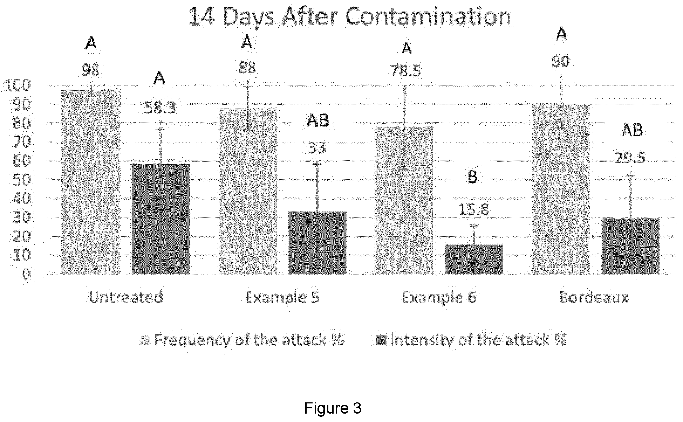

On day 24, 14 days after artificial contamination, the plants were examined again. As shown in Figure 3, 98% of the leaves of the untreated plants were affected by mildew, and had an attack intensity of 58.3%. Example 6 and Example 5 both reduced the intensity of downy mildew compared to the untreated leaves, showing fungicide behaviour. Example 6 showed better efficiency compared to the commercially available Bordeaux mixture, and Example 5 modality is of the same level of effectiveness as the Bordeaux mixture.

Both Example 5 and Example 6 were shown to be sufficient at controlling downy mildew showing equivalent or better performance than the reference material (Bordeaux mixture) at a lower copper level (140 g Cu/ha vs 400 g Cu/ha). Furthermore, no symptoms of phytotoxicity were observed when using the fungicides.

### Examples 7 and 8

Two particulate compositions, Example 7 (which is the same as Example 6 described above) and Example 8 , according to the present invention were tested alongside Bordeaux mixture in two different vineyards. Bordeaux mixture was used as a commercially available reference product. Example 7 and Example 8 had the same chemical composition as one another. The difference between the two particulate compositions is the method of blending, Example 7 is blended by knead mixing, and Example 8 is blended by extrusion. An untreated control was also used. The following doses of each fungicide were used:

**Table 7 - Fungicide doses**

| Fungicide | Dose of product/application, kg/ha | Dose of copper/application, kg/ha | Amount of copper, g/kg |
|---|---|---|---|
| Bordeaux mixture | 2 | 0.4 Cu | 200 |
| Bordeaux mixture | 1 | 0.2 Cu | 200 |
| Example 8 | 9.9 | 0.2 Cu | 20.1 |
| Example 8 | 7 | 0.14 Cu | 20.1 |
| Example 8 | 5.5 | 0.11 Cu | 20.1 |
| Example 7 | 7 | 0.14 Cu | 20.1 |

The compositions were mixed in water and applied by a pneumatique back pulverizer STIHL SR430 to the aerial parts of the vine in 10 batches during a 3 month period (from the development of the leaves to the formation of the grapes).

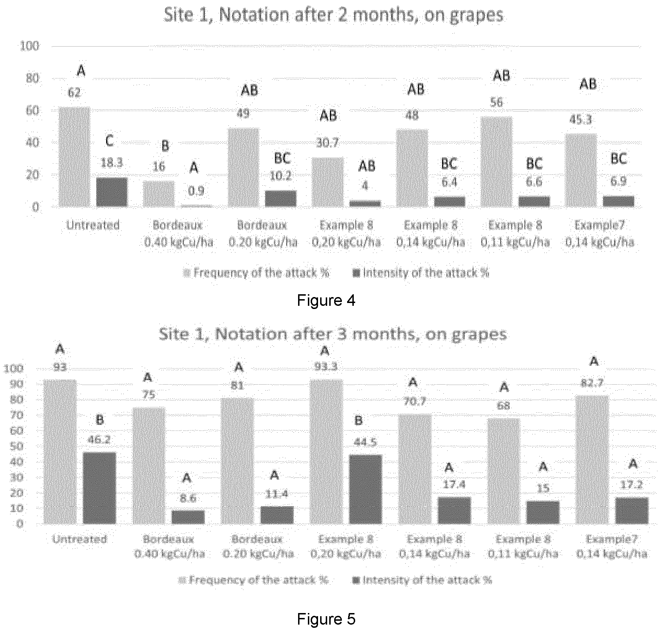

After 2 months, the presence of mildew on the grapes at the first vineyard was evaluated. As shown in Figure 4, Bordeaux mixture at a concentration of 0.4 kgCu/ha was found to provide the greatest reduction in frequency and intensity of mildew, as this was the highest concentration of copper used, this was expected. By reducing the Bordeaux mixture dosage to 0.2 kgCu/ha the efficacy was also dramatically reduced. This was not the case for the Examples 7 and 8 as even their dosage in copper was lower than 0.2 kgCu/ha they performed similarly or in most of the cases better. There was no statistical difference shown between the extruded Example 8 and knead mixed Example 7 bentonite fungicides. Therefore, particulate compositions according to the present invention may be prepared by blending bentonite, a copper compound and optionally water to form a paste using either extrusion or knead mixing.

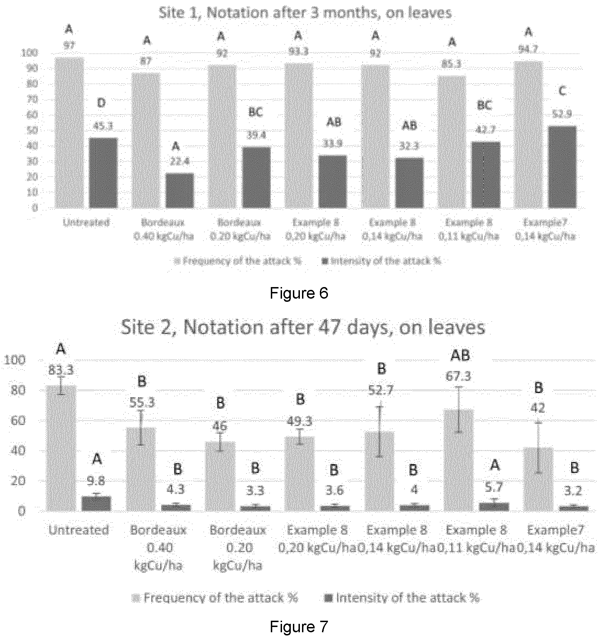

In the first vineyard, after 3 months, the presence of mildew on both the grapes and leaves was evaluated. As shown in Figures 5 and 6, the Bordeaux mixture in full dosage (0.4 kgCu/ha) continues to show the best performance. Nevertheless the Examples 7 and 8 in dosages on leaves below 0.2 kgCu/ha, continue to perform better than the Bordeaux mixture in half dosage on leaves (0.2 kgCu/ha).

In the second vineyard, after 47 days from the product's application, the presence of mildew on the leaves was evaluated. As shown in Figure 7, Examples 7 and 8 at the same and lower dose rate as Bordeaux mixture (down to 0.14 kgCu/ha) showed a statistically comparable frequency and intensity of mildew.

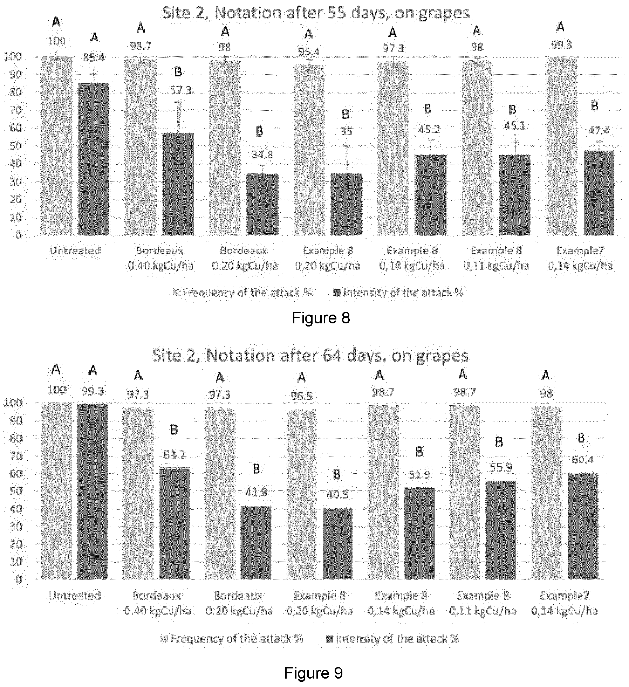

The grapes of the second vineyard were analysed after 55 days and 64 days. The frequency and intensity of mildew on the grapes was analysed. As shown in Figures 8 and 9, all of the fungicides show statistically comparable results.

### Examples 9, 10 and 11

To investigate the fungicide properties of the particulate compositions prepared according to the present invention by using different sources of copper, three particulate compositions, Examples 9, 10 and 11 were prepared and tested in-vitro, under the artificial contamination with mildew (Plasmopara Viticola) of vine leaves in petri discs. A commercially available reference product, Bordeaux mixture, was also tested. An untreated control was also used

Examples 9, 10 and 11 were made using the method detailed above for Examples 1 to 8, the respective bentonites were mixed with CuSO*5H₂O or CuCl₂ or Cu(OH)₂ and water and then blended using an extruder, dried and granulated. The components of each paste produced can be found in Table 8.

**Table 8 - Components of each paste**

| Example | Amount of bentonite, g | Bentonite moisture content, % | Amount of CuSO₄•5H₂O, g | Amount of CuCl₂ g | Amount of Cu(OH)₂ (g) | Amount of water added, g |
|---|---|---|---|---|---|---|
| Example 9 | 228 | 12.28 | 24.97 | 0 | 0 | 58.63 |
| Example 10 | 228 | 12.28 | 0 | 13.45 | 0 | 58.63 |
| Example 11 | 228 | 12.28 | 0 | 0 | 9.76 | 58.63 |

The final composition of each paste and of each particulate can be found in Tables 9 and 10.

**Table 9 - Composition of each paste**

| Example | Amount of bentonite, g | wt.% dry bentonite | wt.% CuSO₄•5 H₂O | wt.% CuCl₂ | wt.% Cu(OH)₂ | wt.% Cu | wt.% water |
|---|---|---|---|---|---|---|---|
| Example 9 | 200 | 64.2 | 8.0 | 0 | 0 | 2.04 | 27.8 |
| Example 10 | 200 | 66.6 | 0 | 4.5 | 0 | 2.12 | 28.9 |
| Example 11 | 200 | 67.5 | 0 | 0 | 3.3 | 2.15 | 29.2 |

**Table 10 - Composition of each particulate (as dried and milled)**

| Example | wt.% dry bentonite | wt.% water | wt.% CuSO₄•5H₂O | wt.% CuCl₂ | wt.% Cu(OH)₂ | wt.% elemen tal copper | Weight ratio of bentonite to elemental copper |
|---|---|---|---|---|---|---|---|
| Example 9 | 80.0 | 10.0 | 10.0 | 0.0 | 0.0 | 2.54 | 31.5 |
| Example 10 | 84.3 | 10.0 | 0.0 | 5.7 | 0.0 | 2.68 | 31.5 |
| Example 11 | 85.9 | 10.0 | 0.0 | 0.0 | 4.2 | 2.73 | 31.5 |

For each candidate 4 repetitions (petri discs) were studied, each containing 12 discs cut out of healthy leaves and placed in petri disc containing agar. The candidates were suspended in water and sprayed on the leaves with the help of a micro-sprayer with Gaz injection (CO₂). The dosage sprayed of each product can be found in Table 11.

**Table 11- Composition of applied products**

| | Cu content | dose | Cu per hectare |
|---|---|---|---|
| Bordeaux mixture | 200 g/kg | 0.75 kg/ha | 150 g/ha |
| Example 9 | 25.4 g/kg | 6 kg/ha | 152.4 g/ha |
| Example 10 | 26.8 g/kg | 6 kg/ha | 160.8 g/ha |
| Example 11 | 27.3 g/kg | 6 kg/ha | 163.8 g/ha |

The leaf discs after being treated with the requested amount of each candidate were placed in the petri discs containing 20g/L of agar. The treated discs were then contaminated with the help of a laboratory sprayer with a solution containing 10⁵ spores of mildew. The whole testing procedure was repeated twice. For the first trial the results reading took place 7 days after the inoculation and for the second trial 5 days after the inoculation. The results reading and interpretation was performed as described in the previous examples.

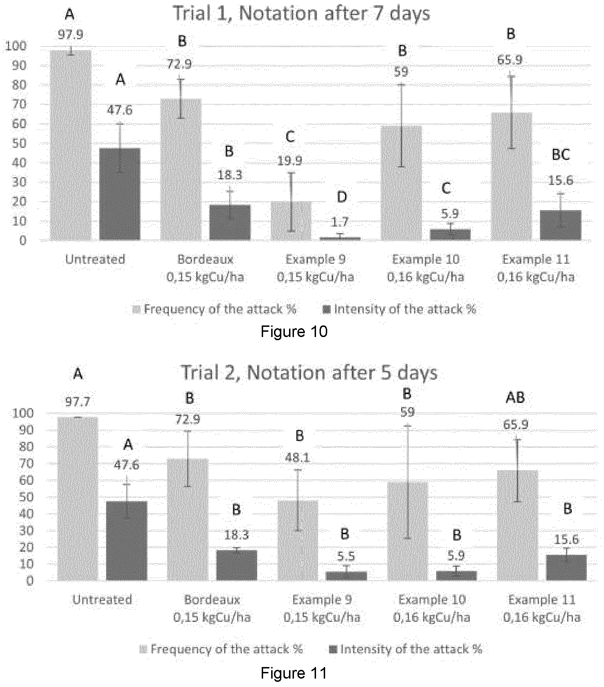

Regarding the first trial and as shown in Figure 10, 7 days after the contamination the mildew had affected 97.9% of the untreated leaves (frequency of the attack) covering 47.6% of their surface (intensity of the attack). The leaves that were treated with the Bordeaux mixture as well as with the Examples 10 and 11 showed the same level of decrease in the frequency of the attack while the Examples 10 and 11 showed even higher decrease in the intensity of the attack than the Bordeaux mixture. The effect of Example 9 was remarkable as it decreased the frequency of mildew attack down to 19.9% and the intensity down to 1.7%.

Regarding the second trial, and as shown in Figure 11, 5 days after the contamination the mildew had affected 97.7% of the untreated leaves, covering 47.6% of their surface. From a statistical point of view, all treatments showed an equivalent effect against mildew regarding the frequency and intensity of the attack. It was only the intensity of the attack of the Example 11 that was evaluated as slightly close to the untreated reference.

The present inventors found that the particulate composition according to the present invention is an effective fungicide. The present inventors surprisingly found that less copper per hectare can be used when the fungicide is a particulate composition prepared according to the present invention. In particular, the particulate composition according to the present invention is an effective fungicide for preventing mildew on vines.

The present inventors also investigated the copper compound used, and compared the use of CuCl₂, CuSO₄•5H₂O and Cu(OH)₂. Use of all of the copper compound resulted in effective fungicides, however CuSO₄•5H₂O displayed the greatest reduction in mildew frequency and intensity.

## Claims

1. A method of forming a particulate composition suitable for use as a fungicide for plant or plant leaf or plant fruit protection, the method comprising the steps of:
a) blending bentonite, a copper compound, optionally water, and optionally a formulation aid to form a paste, wherein the bentonite comprises water, and wherein the weight ratio of the bentonite on a dry basis to elemental copper in the paste is at least about 11;
b) drying the paste until the water content of the paste is below or equal to about 15 wt.%; and
c) reducing the size of the dried paste to form particulates, by any method, such as by grinding or milling or crushing or sieving or extrusion or classifying.

2. The method according to claim 1, wherein in step a), the method comprises blending water with the bentonite and copper.

3. The method according to claim 1 or 2, wherein the blending comprises extrusion.

4. The method according to claim 1 or 2, wherein the blending comprises knead mixing.

5. The method according to any one of claims 1 to 4, wherein the bentonite comprises natural smectite, preferably the bentonite comprises a natural smectite comprising sodium and/or calcium and/or magnesium, most preferably the bentonite comprises a natural calcium/magnesium smectite.

6. The method according to any one of claims 1 to 5, wherein the particulates comprise bentonite, elemental copper and at most about 15 wt.% water, based on the total weight of the particulates, wherein the weight ratio of the bentonite to elemental copper is at least about 11.

7. The method according to any one of claims 1 to 6, further comprising step d), wherein step d) comprises adding a formulation aid to the particulates, wherein the formulation aid is present from about 0.1 to about 60 wt.%, based on the total weight of the particulates.

8. The method according to claim 7, wherein the formulation aid is selected from: a surfactant, dispersant, solvent, emulsifier, filler or any combination thereof.

9. The method according to any one of claims 1 to 8, wherein the copper compound is selected from a group comprising: CuSO₄•5H₂O, CuCl₂, Cu(OH)₂ or combinations thereof.

10. A method for treating or reducing fungal and bacterial diseases on a plant or plant leaf or plant fruit comprising contacting aerial parts of a plant or plant leaf or plant fruit with the particulate composition prepared by the method of any one of the preceding claims.

11. Use of the particulate composition prepared by the method of any one of claims 1 to 10 to reduce or treat fungal and bacterial diseases on a plant or plant leaf or plant fruit.

12. The use according to claim 11, wherein the composition is used to treat the aerial parts of the plant or plant leaf or plant fruit.

13. The use according to claims 11 or 12, wherein the composition is used to prevent mildew on grape vines.

## Amended claims

### Amended claims in accordance with Rule 137(2) EPC.

1. A method of forming a particulate composition suitable for use as a fungicide for plant or plant leaf or plant fruit protection, the method comprising the steps of:
a) blending bentonite, a copper compound, optionally water, and optionally a formulation aid to form a paste, wherein the bentonite comprises water, and wherein the weight ratio of the bentonite on a dry basis to elemental copper in the paste is at least about 11;
b) drying the paste until the water content of the paste is below or equal to about 15 wt.%; and
c) reducing the size of the dried paste to form particulates, by any method, such as by grinding or milling or crushing or sieving or extrusion or classifying,
wherein the paste of step a) comprises about 20 to about 50 wt.% of water, and about 50 to about 70 wt.% bentonite on a dry basis, based on the total weight of the paste.

2. The method according to claim 1, wherein in step a), the method comprises blending water with the bentonite and copper.

3. The method according to claim 1 or 2, wherein the blending comprises extrusion.

4. The method according to claim 1 or 2, wherein the blending comprises knead mixing.

5. The method according to any one of claims 1 to 4, wherein the bentonite comprises natural smectite, preferably the bentonite comprises a natural smectite comprising sodium and/or calcium and/or magnesium, most preferably the bentonite comprises a natural calcium/magnesium smectite.

6. The method according to any one of claims 1 to 5, wherein the particulates comprise bentonite, elemental copper and at most about 15 wt.% water, based on the total weight of the particulates, wherein the weight ratio of the bentonite to elemental copper is at least about 11.

7. The method according to any one of claims 1 to 6, further comprising step d), wherein step d) comprises adding a formulation aid to the particulates, wherein the formulation aid is present from about 0.1 to about 60 wt.%, based on the total weight of the particulates.

8. The method according to claim 7, wherein the formulation aid is selected from: a surfactant, dispersant, solvent, emulsifier, filler or any combination thereof.

9. The method according to any one of claims 1 to 8, wherein the copper compound is selected from a group comprising: CuSO₄•5H₂O, CuCl₂, Cu(OH)₂ or combinations thereof.

10. A method for treating or reducing fungal and bacterial diseases on a plant or plant leaf or plant fruit comprising contacting aerial parts of a plant or plant leaf or plant fruit with the particulate composition prepared by the method of any one of the preceding claims.

11. Use of the particulate composition prepared by the method of any one of claims 1 to 10 to reduce or treat fungal and bacterial diseases on a plant or plant leaf or plant fruit.

12. The use according to claim 11, wherein the composition is used to treat the aerial parts of the plant or plant leaf or plant fruit.

13. The use according to claims 11 or 12, wherein the composition is used to prevent mildew on grape vines
